# EUROPÄISCHE PATENTSCHRIFT

(11) **EP 2 675 691 B1**
(45) Veröffentlichungstag und Bekanntmachung des Hinweises auf die Patenterteilung: **20.05.2015**
(21) Anmeldenummer: 12704049.1
(22) Anmeldetag: 09.02.2012
(51) Int. Cl.: B62B 3/00, B62B 1/12

(54) **TRANSPORTKARRE UND VERWENDUNG EINER TRANSPORTKARRE**
TRANSPORT CART AND USE OF A TRANSPORT CART
CAMION DE TRANSPORT ET UTILISATION D'UN CAMION DE TRANSPORT

(30) Priorität: 14.02.2011 CH 255112011
(43) Veröffentlichungstag der Anmeldung: 25.12.2013
(73) Patentinhaber: Digital Consult Integral AG, 6300 Zug (CH)
(72) Erfinder: BOSSI, Roald P., CH-8918 Unterlunkhofen (CH); RAPPI, Rolando, CH-6300 Zug (CH)
(74) Vertreter: OK pat AG
(86) Internationale Anmeldenummer: PCT/EP2012/052229
(87) Internationale Veröffentlichungsnummer: WO 2012/110397

(56) Entgegenhaltungen:
- GB-A- 2 201 926
- GB-A- 2 472 426
- US-A- 5 158 319
- US-A1- 2002 067 983
- US-A1- 2004 076 501

## Beschreibung

### ERFINDUNGSGEBIET

Gegenstand der Erfindung ist eine Transportkarre, die besonders flexibel einsetzbar ist. Es geht auch um die Verwendung einer solchen Transportkarre.

Es wird die Priorität der Schweizer Patentanmeldung CH00255/11 beansprucht, die unter dem selben Titel und im Namen des selben Anmelders am 14.2.2011 eingereicht wurde.

### STAND DER TECHNIK

Es gibt verschiedenste Karren, die dazu ausgelegt sind grosse oder schwere Gegenstände aufzunehmen und manuell zu bewegen. Sackkarren sind zum Beispiel oft mit zwei grossen Reifen ausgestattet und erlauben es unter Anwendung der Hebelkraft schwere Lasten aufzunehmen und an einen anderen Ort zu transportieren. Oft ist es aber schwierig mit einer Sackkarre eine schwere Last punktgenau abzustellen oder die Last zum Beispiel an eine Maschine zu übergeben.

Um eine Last zum Beispiel vom Boden anzuheben und auf ein höheres Niveau zu fördern, sind Sackkarren teilweise mit einem Hubmechanismus versehen, der es ermöglicht die Last wie bei einem Gabelstapler aufzunehmen und nach oben zu hieven.

Aus dem Dokument US 2004/076501 A1 ist eine *Transportkarre* bekannt, die in einem bodennahen Bereich ein erstes Rollenpaar und ein zweites Rollenpaar aufweist. Die Rollenpaare sind so an einer Rahmenkonstruktion der Karre angebracht, dass diese über einen Boden rollbar ist. Das erste Rollenpaar umfasst zwei Rollen, die je um eine Horizontalachse abrollbar und um je eine Schwenkachse drehbar sind. Das zweite Rollenpaar umfasst Rollen, die starr koaxial zueinander angeordnet sind. Die Rollen des zweiten Rollenpaares sind um eine gemeinsame Horizontalachse abrollbar. Die Transportkarre kann manuell geschoben werden und sie weist ein Transportelement auf, das zum Transportieren einer Last ausgelegt ist. Im vorderen, bodennahen Bereich umfasst die Transportkarre zwei weitere Rollen.

Aus dem Dokument US 5 158 319 A ist ein Kinderwagen bekannt, der für verschiedenstes Gelände tauglich ist. Die Geländetauglichkeit wird durch den Einsatz von trommelförmigen Walzen erreicht.

### ZU LÖSENDE TECHNISCHE AUFGABE

Die technische Aufgabe der Erfindung ist daher eine Transportkarre bereit zu stellen, die einerseits wie eine Sackkarre eingesetzt werden kann, um z.B. schwere Lasten hebelartig anzuheben oder um Stufen zu überwinden, die aber auch ein genaues Positionieren schwerer Lasten ermöglichen.

### OFFENBARUNG DER ERFINDUNG

Die oben genannte Aufgabe der Erfindung ist durch eine Transportkarre mit einer Rahmenkonstruktion gelöst, die in einem bodennahen Bereich ein erstes Rollenpaar und ein zweites Rollenpaar aufweist, die so an der Rahmenkonstruktion angebracht sind, dass die Transportkarre über einen Boden rollbar ist. Das erste Rollenpaar umfasst zwei Rollen, die je um eine Horizontalachse abrollbar und um je eine Schwenkachse drehbar sind. Das zweite Rollenpaar umfasst zwei Rollen, die starr koaxial zueinander angeordnet und um eine gemeinsame Horizontalachse abrollbar sind. Die Transportkarre weist einen Bereich zum manuellen Schieben und ein Transportelement zum Transportieren einer Last auf. Zusätzlich umfasst die Transportkarre zwei Rollen, die in dem bodennahen Bereich beweglich so an einem Stellmechanismus angeordnet sind, dass sie bei Bedarf in eine Fahrposition überführbar sind, wobei beim Überführen in die Fahrposition die Rollen des zweiten Rollenpaars vom Boden abgehoben werden.

Weitere vorteilhafte Ausführungsformen der Erfindung werden in den Unteransprüchen definiert.

### VORTEILHAFTE WIRKUNGEN

Der wichtigste Vorteil der vorliegenden Erfindung ist, dass auch schwere und unhandliche Lasten angehoben und in jeder beliebigen Richtung, auch seitwärts, verschoben werden können.

Aufgrund der grossen hinteren Räder, die als zweites Rollenpaar dienen, kann die Transportkarre ähnlich wie eine Sackkarre über nahezu jeden beliebigen Boden und sogar über Treppenstufen bewegt werden.

Die Transportkarre kann problemlos auf der Stelle um 360 Grad gedreht werden nachdem das zweite Rollenpaar angehoben wurde. Die Transportkarre kann auch seitwärts gefahren werden.

Die Transportkarre kann je nach Ausführungsform Lasten von bis zu 500 kg problemlos durch das manuelle Betätigen einer Kurbel auf eine gewünschte Höhe anheben.

Die Transportkarre kann je nach Ausführungsform Höhenunterschiede bis zu mehr als 1 Meter überwinden indem die Last durch das Betätigen einer Kurbel angehoben wird.

Die Transportkarre hat vorzugsweise eine klappbare Platte, um z.B. grosse Medienrollen, z.B. Papierrollen, aufnehmen und abgeben zu können. Wenn die klappbare Platte nach oben geklappt ist, ist die Rolle gegen Wegrollen und Herunterfallen gesichert.

Die Transportkarre lässt sich besonders vorteilhaft einsetzen für die Handhabung von auf Rollen aufgewickelten Materialien, wie Papier, Pappe, Folie, Stoffe, Teppiche, oder dergleichen.

Die Transportkarre lässt sich besonders vorteilhaft einsetzen zum Beladen oder Befüllen einer Maschine oder zum Entnehmen von Produkten aus einer Maschine. Die Transportkarre kann z.B. zum Handhaben von sogenannten Coils in der metallverarbeitenden Industrie oder von Kabelrollen eingesetzt werden.

Die Transportkarre lässt sich besonders vorteilhaft einsetzen bei der Lagerhaltung, z.B. in einem Regallager, wo Waren (oder z.B. Bücher) in einer engen Regalstrasse auf einen bestimmte Höhe angehoben und dann ins Regal einsortiert werden müssen.

### KURZE BESCHREIBUNG DER ZEICHNUNGEN

Weitere Einzelheiten und Vorteile der Erfindung werden im Folgenden anhand von Ausführungsbeispielen und mit Bezug auf die Zeichnung beschrieben.
- Fig. 1: zeigt eine schematische Perspektivansicht einer ersten Ausführungsform der Erfindung von schräg vorne;
- Fig. 2: zeigt eine schematische Perspektivansicht einer zweiten Ausführungsform der Erfindung von schräg vorne;
- Fig. 3: zeigt eine stark schematisierte Ansicht einer weiteren Ausführungsform des Stellmechanismus der Erfindung;
- Fig. 4A: zeigt eine stark schematisierte Ansicht einer weiteren Ausführungsform des Stellmechanismus der Erfindung in einer ersten Position;
- Fig. 4B: zeigt die Ausführungsform der Fig. 4A in einer zweiten Position;
- Fig. 4C: zeigt die Ausführungsform der Fig. 4A nach dem Ausklappen der zusätzlichen Rollen;
- Fig. 4D: zeigt die Ausführungsform der Fig. 4A in der Fahrposition;
- Fig. 5: zeigt eine schematische Perspektivansicht einer weiteren Ausführungsform der Erfindung von schräg oben.

### DETAILLIERTE BESCHREIBUNG DER BEVORZUGTEN AUSFÜHRUNGSFORMEN

In dieser Patentanmeldung werden bestimmte Begriffe benutzt, deren Interpretation nicht auf den spezifisch gewählten Begriff beschränkt werden soll. Diese Begriffe beziehen sich vielmehr auf das allgemeinen Konzept dahinter.

Der Begriff "Rolle" oder "Rollenpaar" soll nicht nur klassische Rollen umfassen, sondern auch Walzen und Räder.

Es geht bei der Erfindung primär um Karren 100, die mit Muskelkraft zu bewegen sind. Die Karre 100 kann aber z.B. mit elektrisch, pneumatisch oder anderes angetriebenen Hilfsmitteln ausgestattet sein, um zum Beispiel eine Last 2 anheben zu können.

Als Rahmenkonstruktion 10 dient bei allen Ausführungsformen ein offener oder geschlossener Rahmen aus einem oder mehreren Profilen. Die Rahmenkonstruktion 10 ist vorzugsweise in sich starr und dazu ausgelegt alle Kräfte aufzunehmen. Die Rahmenkonstruktion 10 kann zum Beispiel die Holme und/oder Profile 10.1, 10.2, 10.3 und 10.4 umfassen, wie in den Figuren gezeigt. Vorzugsweise umfasst die Rahmenkonstruktion 10 bei allen Ausführungsformen zusätzliche Querstreben und Versteifungselemente.

Im Folgenden werden zwei beispielhafte Ausführungsformen im Detail beschrieben, bevor dann weitere Varianten erläutert werden.

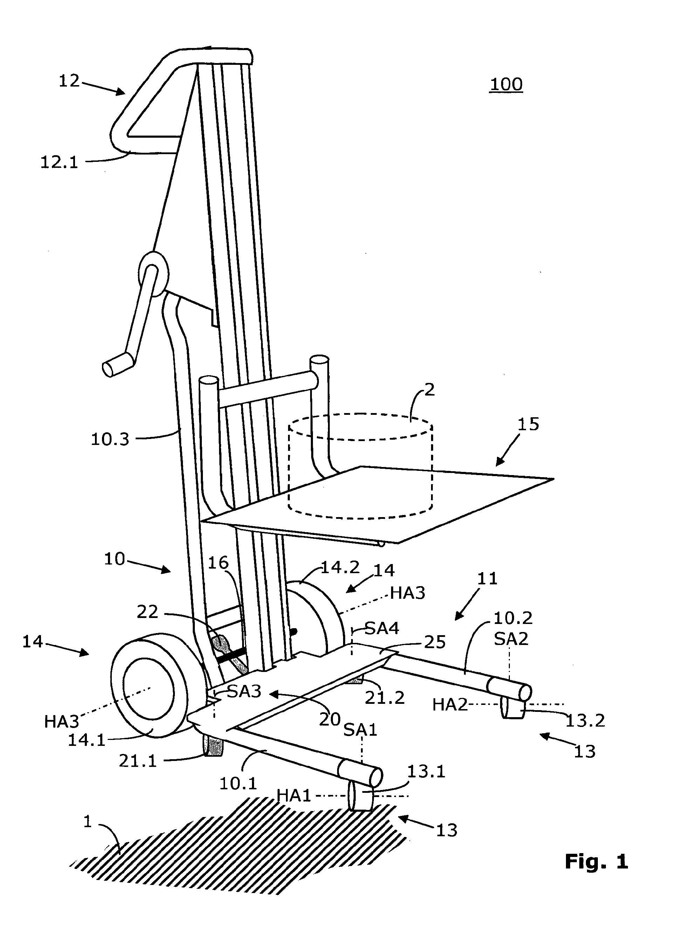

In Fig. 1 ist eine Transportkarre 100 mit einer Rahmenkonstruktion 10 gezeigt, die in einem bodennahen Bereich 11 ein erstes (vorderes) Rollenpaar 13 und ein zweites (hinteres) Rollenpaar 14 aufweist. Die Rollenpaare 13, 14 sind so an der Rahmenkonstruktion 10 angebracht, dass diese über einen Boden 1 rollbar ist.

Das erste Rollenpaar 13 umfasst bei allen Ausführungsformen zwei Rollen 13.1, 13.2, die je um eine Horizontalachse HA1, HA2 abrollbar und um je eine Schwenkachse SA1, SA2 drehbar sind. Die Rollen 13.1, 13.2 können z.B. ähnlich ausgeführt sein wie die Rollen von Schreibtischdrehstühlen, wobei zum Transportieren grosser Lasten (bis 500 kg) die Rollen 13.1, 13.2 und deren Aufhängungen entsprechend stabil sein müssen.

Die Schwenkachsen SA1, SA2 müssen nicht unbedingt senkrecht stehen. Sie können auch leicht schräg angestellt sein.

Das zweite Rollenpaar 14 umfasst zwei Rollen 14.1, 14.2, die starr koaxial zueinander angeordnet und um eine gemeinsame Horizontalachse HA3 abrollbar sind. Die Rollen 14.1, 14.2 können auf einer gemeinsamen (durchgängigen) Starrachse 16 oder auf zwei separaten Achsen sitzen.

Die Transportkarre 100 weist einen Bereich 12 zum manuellen Schieben der Transportkarre 100 auf. Vorzugsweise sind im Bereich 12 Griffe 12.1 oder Griffmulden angeordnet.

Die Transportkarre 100 umfasst ein sogenanntes Transportelement 15, das zum Transportieren einer Last 2 ausgelegt ist. Es kann sich bei allen Ausführungsformen um eine Ladefläche (wie in Fig. 1, 2 und 5 gezeigt), Zinken (wie bei einem Gabelstapler), ein Gitter, einen Korb, eine Mulde oder einen Dorn (z.B. zum Aufnehmen einer Papierrolle) handeln. Die Ladefläche ist vorzugsweise bei allen Ausführungsformen gebogen (nicht in den Figuren gezeigt), um sicher zu stellen, dass die Last 2 stets nach hinten (in Fahrtrichtung betrachtet) rutscht.

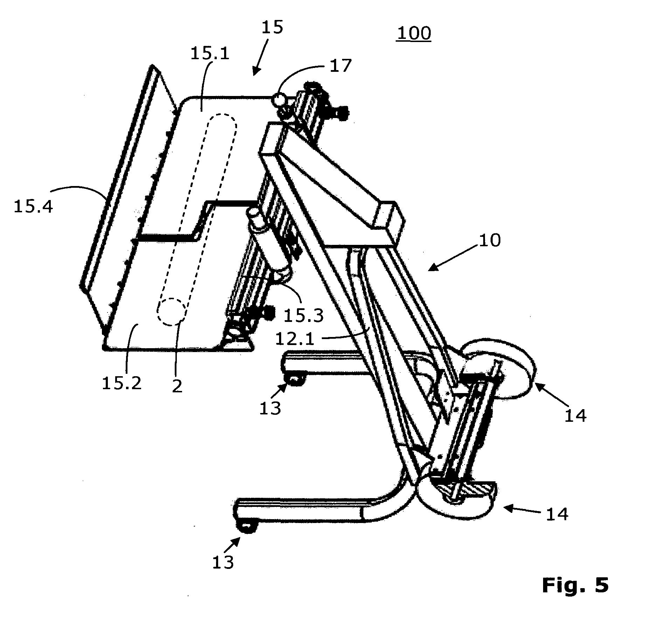

Vorzugsweise ist das Transportelement 15 bei allen Ausführungsformen so ausgelegt, dass es verstellbar (an die Last 2 anpassbar) ist. Fig. 5 zeigt eine Lösung mit ausziehbarem Transportelement 15.

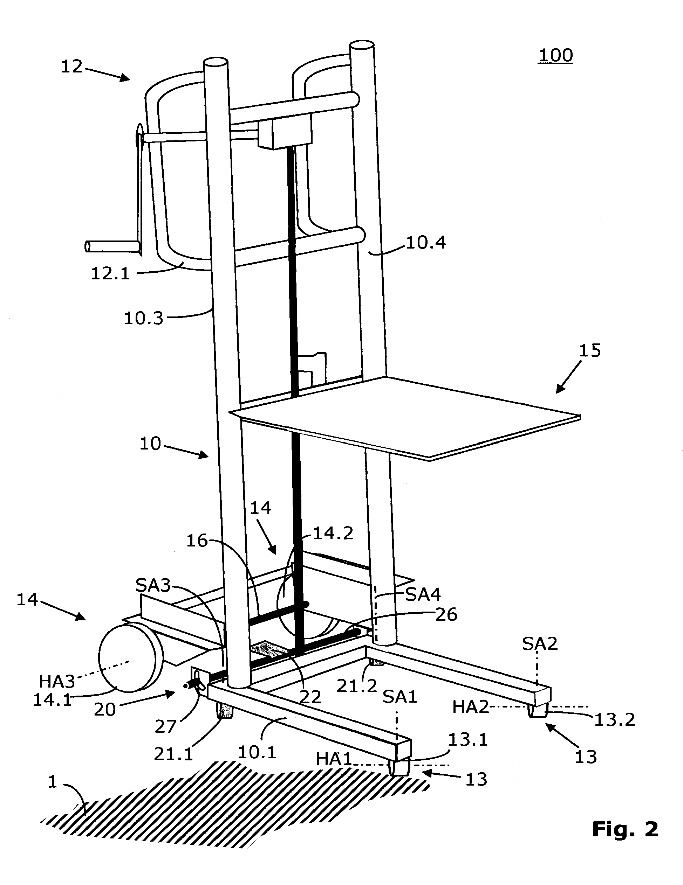

Gemäss Erfindung weist die Transportkarre 100 zwei zusätzliche Rollen 21.1, 21.2 auf, die in dem bodennahen Bereich 11 beweglich so an einem Stellmechanismus 20 angeordnet sind, dass sie bei Bedarf in eine Manövrierposition überführbar sind. Beim Überführen in die Manövrierposition werden die Rollen 14.1, 14.2 des zweiten Rollenpaars 14 vom Boden 1 abgehoben. Sowohl in Fig. 1 als auch in Fig. 2 ist die Manövrierposition gezeigt, d.h. die Rollen 14.1, 14.2 des zweiten Rollenpaars 14 berühren den Boden 1 nicht. Das Gewicht der Karre 100 und der Last 2 wird in der Manövrierposition von den vier Rollen 13.1, 13.2, 21.1 und 21.2 getragen.

Die Rollen 21.1, 21.2 sind bei allen Ausführungsformen so ausgeführt, dass jede der Rollen 21.1, 21.2 um Vertikalachsen SA3, SA4 geschwenkt werden kann. Die Schwenkachsen SA3, SA4 müssen nicht unbedingt senkrecht stehen. Sie können auch leicht schräg angestellt sein.

Mit diesen vier Rollen 13.1, 13.2, 21.1 und 21.2 kann die Karre 100 in der Manövrierposition problemlos bewegt und in eine genau vorgegebene Position gefahren werden, was z.B. dann wichtig ist, wenn die Last 2 an eine Maschine (z.B. eine Druckmaschine) übergeben werden muss. In der Manövrierposition kann die Karre 100 auch seitwärts gefahren werden.

Der Stellmechanismus 20 ist vorzugsweise bei allen Ausführungsformen so ausgelegt, dass er mit Muskelkraft betätigt werden kann. In beiden Figuren 1 und 2 sind Lösungen gezeigt, die ein Fusspedal 22 oder einen Fusshebel 22 aufweisen, um die Karre 100 aus der Fahrposition in die Manövrierposition überführen zu können.

Der Stellmechanismus 20 ist vorzugsweise bei allen Ausführungsformen so ausgelegt, dass er von Hand oder per Fuss betätigbar ist und vorzugsweise einen Betätigungshebel 22 oder eine Betätigungsquerstange umfasst.

Der Stellmechanismus 20 ist vorzugsweise bei allen Ausführungsformen so ausgelegt, dass er einen Betätigungshebel 22 oder eine Betätigungsquerstange umfasst, der/die über einen Hebelarm auf die zusätzlichen Rollen 21.1, 21.2 einwirkt, um diese in die Manövrierposition zu überführen.

Der Stellmechanismus 20 kann bei allen Ausführungsformen auch so ausgelegt sein, dass er eine Kurbel umfasst, die auf die zusätzlichen Rollen 21.1, 21.2 einwirkt, um diese in die Manövrierposition zu überführen.

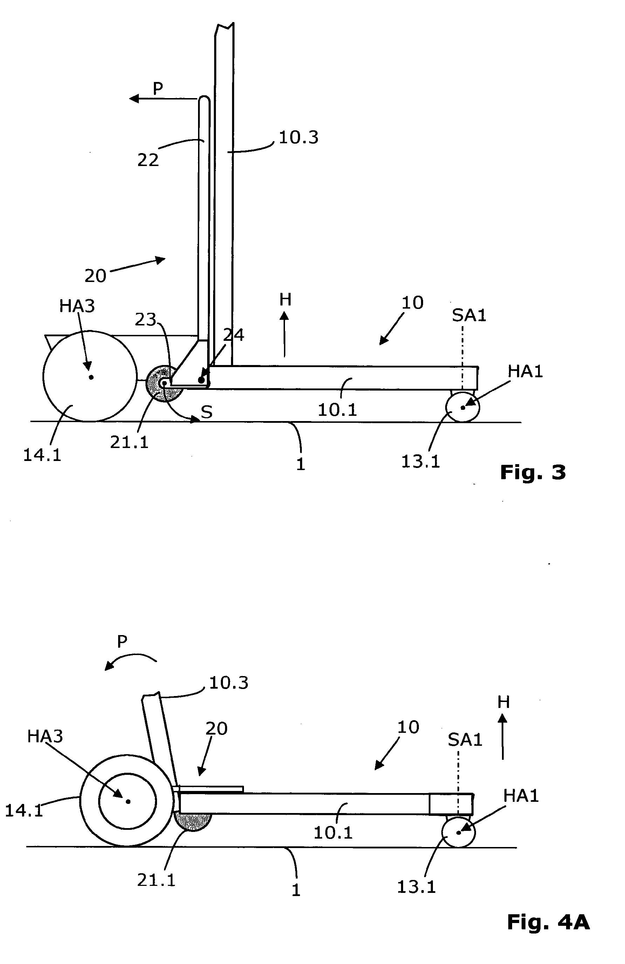

Fig. 3 zeigt eine stark schematisierte Ansicht einer weiteren Ausführungsform des Stellmechanismus 20 der Erfindung. In Fig. 3 ist angedeutet, dass man unter Einsatz des Hebelgesetzes eine mit Muskelkraft auszuführende Bewegung P umsetzen kann in eine Dreh- oder Schwenkbewegung S. Diese Dreh- oder Schwenkbewegung S bewegt die Rollen 21.1, 21.2 nach unten und bringt sie so in die Manövrierposition. Der Stellmechanismus 20 kann einen ersten Hebelarm 22, einen zweiten Hebelarm 23 und eine Schwenkachse 24 umfassen, wie in Fig. 3 angedeutet. Der Stellmechanismus 20 ist vorzugsweise bei allen Ausführungsformen an der Rahmenkonstruktion 10 befestigt/gelagert.

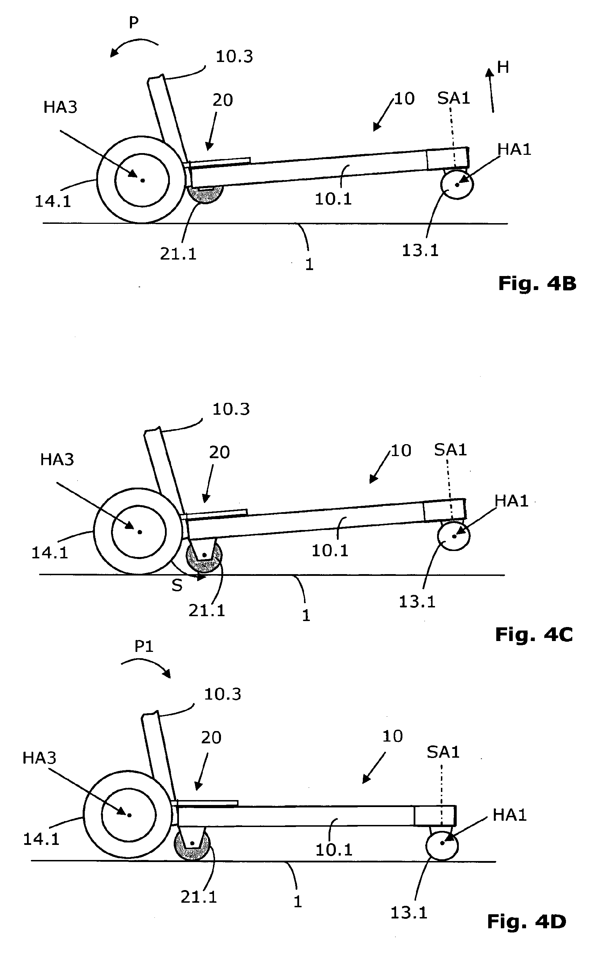

Fig. 4A zeigt eine stark schematisierte Ansicht einer weiteren Ausführungsform des Stellmechanismus 20 der Erfindung in einer ersten Position. Die Rollen 21.1, 21.2 sind hier in einer oberen Position. Durch ein Ziehen/Schwenken P wird die Transportkarre 100 auf die Rollen 14.1, 14.2 gestellt, wie bei einer Sackkarre, die gekippt wird. Beim Ziehen/Schwenken P werden die Rollen 13.1, 13.2 angehoben, wie durch den Pfeil H angedeutet. Fig. 4B zeigt diese Ausführungsform in der gekippten (Fahr-)Position mit angehobenen Rollen 13.1, 13.2. In dieser Position steht die Transportkarre 100 nur noch auf den hinteren grossen Rollen 14.1, 14.2. Wenn ein ausreichender Bodenabstand erreicht ist, können die zusätzlichen Rollen 21.1, 21.2 durch Betätigung des Stellmechanismus 20 ausgeklappt werden, wie in Fig. 4C durch den Pfeil S dargestellt. Die Rollen 21.1, 21.2 berühren vorzugsweise beim Ausklappen den Boden 1 nicht, dass heisst sie können mit wenig Kraftaufwand ausgeklappt werden. Fig. 4C zeigt diese Ausführungsform nach dem Ausklappen der zusätzlichen Rollen 21.1, 21.2. Nun kann die Transportkarre 100 in einem letzten Schritt in die Manövrierposition gebracht werden, indem man die Sackkarre 100 in entgegengesetzter Richtung kippt, wie in Fig. 4D durch den Pfeil P1 angedeutet. Beim Kippen in Richtung P1 kommt die Sackkarre 100 auf allen vier Rollen 21.1, 21.2, 13.1, 13.2 zum Stehen und die hintersten Rollen 14.1, 14.2, werden ein kleines Stück vom Boden 1 abgehoben, wie in Fig. 4D gezeigt.

Bei allen Ausführungsformen werden die Rollen 14 angehoben oder vom Boden 1 wegbewegt, wenn der Stellmechanismus 20 betätigt wird. Das Anheben oder Wegbewegen der Rollen 14 geschieht dadurch, dass die Rahmenkonstruktion 10 im hinteren Bereich nach oben gehoben wird, wie in Fig. 3 durch den Pfeil H angedeutet.

Es ist nochmals zu erwähnen, dass die Darstellung in Fig. 3 rein schematischer Natur ist und dazu dient, um die Bewegungsabläufe zu verdeutlichen. Der Stellmechanismus 20 kann auch anderes ausgeführt sein, wie z.B. in den Figuren 1, 2 und 5 angedeutet.

In Fig. 1 sitzt der Stellmechanismus 20 unter einer Fussplatte 25. Auf der rückwärtigen Seite sitzt ein Fusshebel 22 (grau dargestellt), der von der Funktionsweise her dem Hebelarm 22 in Fig. 3 entspricht. Beim Herunterdrücken (durch Fussbetätigung) des Fusshebels 22 werden die Rollen 21.1, 21.2 in die Manövrierposition geschwenkt. Unter der Fussplatte 25 sitzt ein Umlenkmechanismus, der hebelartig auf eine Achse der Rollen 21.1, 21.2 wirkt.

In Fig. 2 umfasst der Stellmechanismus 20 einen horizontal verlaufenden Rundstab 26, der seitlich in Kulissen 27 geführt ist. Die Kulissen 27 weisen z.B. ein Langloch auf, das durch seine Formgebung den Bewegungsverlauf des Rundstabes 26 vorgibt, wenn man den Fusshebel 22 betätigt. Die Rollen 21.1, 21.2 sind über einen Hebelmechanismus mit dem Rundstab 26 so verbunden, dass beim Betätigen des Fusshebels 22 der Rundstab 26 über den Hebelmechanismus auf die Rollen 21.1, 21.2 einwirkt und diese in Richtung Boden 1 drückt.

In Fig. 5 ist eine weitere Transportkarre 100 mit einer Rahmenkonstruktion 10 gezeigt, die in einem bodennahen Bereich 11 ein erstes Rollenpaar 13 und ein zweites Rollenpaar 14 aufweist. Die Rollenpaare 13, 14 sind so an der Rahmenkonstruktion 10 angebracht, dass sie in der normalen Fahrposition über einen Boden 1 rollbar ist. Anders als die bisher beschriebenen Ausführungsformen weist die in Fig. 5 gezeigte Ausführungsform ein Transportelement 15 auf, das zum Transportieren einer ausladenden Last 2 ausgelegt ist. Es kann hier die Ladefläche des Transportelements 15 auseinander gezogen werden, um so eine grössere Auflagefläche zu bieten. Die Auflagefläche umfasst daher zwei Teilplatten 15.1, 15.2, die entlang einer Horizontalschiene 15.3 führbar gelagert sind. Die Horizontalschiene 15.3 ist vorzugsweise höhenverstellbar mit der Rahmenkonstruktion 10 verbunden. Die Horizontalschiene 15.3 ist vorzugsweise teleskopartig ausziehbar. Damit beim Auseinanderfahren der beiden Teilplatten 15.1, 15.2 keine Lücke zwischen diesen Teilplatten 15.1, 15.2 entsteht, ist unterhalb der gezeigten Teilplatten 15.1, 15.2 eine Mittelplatte vorgesehen, die in Fig. 5 nicht sichtbar ist. Eine vordere Klappe 15.4 ist mit der Mittelplatte verbunden und dient dazu ein Herabrutschen oder -rollen der Last 2 zu verhindern.

Vorzugsweise kann im Bereich der Horizontalschiene 15.3 ein Druckknopf 17 vorgesehen sein, um die Horizontalschiene 15.3 zu entriegeln, bevor die beiden Teilplatten 15.1, 15.2 auseinander bewegt werden.

Vorzugsweise kann bei allen Ausführungsformen der Erfindung ein Hubtisch gemäss Fig. 5 zum Einsatz kommen, der auseinander gezogen werden kann.

Vorzugsweise kommen bei allen Ausführungsformen als zweites Rollenpaar 14 Vollgummireifen zum Einsatz, wie in Fig. 5 anhand eines Querschnitts durch den vorderen der beiden Rollen 14 zu erkennen ist. Solche Vollgummireifen haben besonders gute Dämpfungs- und Laufeigenschaften.

Vorzugsweise ist bei allen Ausführungsformen das zweite Rollenpaar 14 so in einem rückwärtigen Bereich an der Rahmenkonstruktion 10 angeordnet, dass die Transportkarre 100 durch eine Kippbewegung um die gemeinsame Horizontalachse HA3 wie eine Sackkarre in eine Position überführbar ist, in der nur das zweite Rollenpaar 14 den Boden 1 berührt. In dieser Position kann man z.B. Stufen oder andere Hindernisse überwinden.

Vorzugsweise sind bei allen Ausführungsformen die Rollen 14.1, 14.2 des zweiten Rollenpaars 14 grösser als die anderen Rollen, um den Fahrkomfort zu verbessern. Besonders bevorzugt sind luftbefüllte Rollen 14.1, 14.2 oder Vollgummirollen 14.1, 14.2.

Die zusätzlichen Rollen 21.1, 21.2 sind vorzugsweise bei allen Ausführungsformen im Bereich zwischen dem ersten Rollenpaar 13 und dem zweiten Rollenpaar 14 angeordnet, wie in den Figuren gezeigt.

Vorzugsweise sind bei allen Ausführungsformen an einer oder mehreren der Rollen 13.1, 13.2, 14.1, 14.2, 21.1, 21.2 Sicherungen oder Bremsen angebracht, um ein Wegrollen zu verhindern.

Vorzugsweise ist bei allen Ausführungsformen ein Mechanismus zum Sichern der Last 2 vorgesehen.

Die Transportkarre 100 eignet sich besonders zum Transportieren einer Papier-, Papp-, Drucksubstratrolle oder einer anderen Medienrolle 2, die teilweise mehrere hundert Kilogramm schwer sein können. Gut einsetzbar ist die Transportkarre 100 z.B. auch zum Handhaben von Stoff- oder Teppichrollen und zur Bewirtschaftung eines Lagers.

**REFERENZLISTE:**

| | |
|---|---|
| Boden | 1 |
| Last | 2 |
| Rahmenkonstruktion | 10 |
| Holme / Profile | 10.1, 10.2, 10.3, 10.4 |
| bodennaher Bereich | 11 |
| Bereich zum manuellen Schieben (Griffelement) | 12 |
| Griffe | 12.1 |
| erstes Rollenpaar | 13 |
| Rollen | 13.1, 13.2 |
| zweites Rollenpaar | 14 |
| Rollen | 14.1, 14.2 |
| Transportelement | 15 |
| Teilplatten | 15.1, 15.2 |
| Horizontalschiene | 15.3 |
| vorderer Klappe | 15.4 |
| Starrachse | 16 |
| Druckknopf | 17 |
| | |
| Stellmechanismus | 20 |
| zusätzlichen Rollen | 21.1, 21.2 |
| 1. Hebelarm | 22 |
| 2. Hebelarm | 23 |
| Schwenkachse | 24 |
| Fussplatte | 25 |
| Rundstab | 26 |
| | |
| Transportkarre | 100 |
| Anheben | H |
| (Kipp)bewegung | P |
| (Kipp)bewegung | P1 |
| Dreh- oder Schwenkbewegung | S |
| Schwenkachsen | SA1, SA2, SA3, SA4 |
| Horizontalachsen | HA1, HA2, HA3 |

## Patentansprüche

1. Transportkarre (100) mit einer Rahmenkonstruktion (10), die in einem bodennahen Bereich (11) ein erstes Rollenpaar (13) und ein zweites Rollenpaar (14) aufweist, die so an der Rahmenkonstruktion (10) angebracht sind, dass die Transportkarre (100) über einen Boden (1) rollbar ist,
- wobei das erste Rollenpaar (13) zwei Rollen (13.1, 13.2) umfasst, die je um eine Horizontalachse (HA1, HA2) abrollbar und um je eine Schwenkachse (SA1, SA2) drehbar sind,
- wobei das zweite Rollenpaar (14) zwei Rollen (14.1, 14.2) umfasst, die starr koaxial zueinander angeordnet und um eine gemeinsame Horizontalachse (HA3) abrollbar sind,
wobei die Transportkarre (100) einen Bereich (12) zum manuellen Schieben der Transportkarre (100) und ein Transportelement (15) zum Transportieren einer Last (2) umfasst, und wobei die Transportkarre (100)
zwei zusätzliche Rollen (21.1, 21.2) umfasst, **dadurch gekennzeichnet, dass** die beiden zusätzlichen Rollen (21.1, 21.2) in dem bodennahen Bereich (11) beweglich so an einem Stellmechanismus (20) angeordnet sind, dass sie bei Bedarf in Fahrposition überführbar sind, wobei beim Überführen in die Fahrposition die Rollen (14.1, 14.2) des zweiten Rollenpaars (14) vom Boden (1) abgehoben werden.

2. Transportkarre (100) nach Anspruch 1, **dadurch gekennzeichnet, dass** die beiden zusätzlichen Rollen (21.1, 21.2) Schwenkachsen (SA3, SA4) haben.

3. Transportkarre (100) nach Anspruch 1 oder 2, **dadurch gekennzeichnet, dass** das zweite Rollenpaar (14) so in einem rückwärtigen Bereich an der Rahmenkonstruktion (10) angeordnet ist, dass die Transportkarre (100) durch eine Kippbewegung um die gemeinsame Horizontalachse (HA3) wie eine Sackkarre in eine Position überführbar ist, in der nur das zweite Rollenpaar (14) den Boden (1) berührt.

4. Transportkarre (100) nach Anspruch 1, 2 oder 3, **dadurch gekennzeichnet, dass** die zusätzlichen Rollen (21.1, 21.2) im Bereich zwischen dem ersten Rollenpaar (13) und dem zweiten Rollenpaar (14) angeordnet sind.

5. Transportkarre (100) nach Anspruch 1, 2 oder 3, **dadurch gekennzeichnet, dass** der Stellmechanismus (20) von Hand oder per Fuss betätigbar ist und vorzugsweise einen Betätigungshebel (22) umfasst.

6. Transportkarre (100) nach Anspruch 5, **dadurch gekennzeichnet, dass** der Stellmechanismus (20) einen Betätigungshebel (22) umfasst, der über einen Hebelarm auf die zusätzlichen Rollen (21.1, 21.2) einwirkt, um diese in die Fahrposition zu überführen.

7. Transportkarre (100) nach Anspruch 5, **dadurch gekennzeichnet, dass** der Stellmechanismus (20) eine Kurbel umfasst, die auf die zusätzlichen Rollen (21.1, 21.2) einwirkt, um diese in die Fahrposition zu überführen.

8. Transportkarre (100) nach einem der vorausgehenden Ansprüche, **dadurch gekennzeichnet, dass** das Transportelement (15) zum Transportieren einer Last (2)
- einen Auflagebereich, vorzugsweise eine erweiterbaren Auflagebereich,
- einen Aufnahmedorn, oder
- einen Aufnahmearm
zum Transportieren der Last (2) umfasst.

9. Verwendung einer Transportkarre (100) nach einem der vorausgehenden Ansprüche 1 bis 8 zum Transportieren von Papier, Pappe, Drucksubstrat, Stoff, Folie oder Coils.

10. Verwendung einer Transportkarre (100) nach einem der vorausgehenden Ansprüche 1 bis 8 zum Bestücken oder Beschicken einer Maschine oder eines Lagers.

## Claims

1. Trolley (100) with a frame structure (10) which has a first pair of rollers (13) and a second pair of rollers (14) in an area (11) close to the floor, which are attached to the frame structure (10) in such a way that the trolley (100) can be rolled across a floor (1),
- wherein the first pair of rollers (13) comprises two rollers (13.1, 13.2), which can each roll about a respective horizontal axis (HA1, HA2) and which can each rotate around a respective pivot axis (SA1, SA2),
- wherein the second pair of rollers (14) comprises two rollers (14.1, 14.2) which are arranged rigidly coaxial with respect to each other and which can roll about a common horizontal axis (HA3),
wherein the trolley (100) comprises a region (12) for manually pushing the trolley (100) and a transport element(15) for transporting a load (2), and wherein the trolley comprises two additional rollers (21.1, 21.2), **characterized in that** the two additional rollers (21.1, 21.2) are movably arranged in the area (11) close to the floor on an actuating mechanism (20) in such a way that they are transferable into driving position if required, wherein during transfer into the driving position the rollers (14.1, 14.2) of the second pair of rollers (14) are lifted off from the floor (1).

2. Trolley (100) according to claim 1, **characterized in that** the two additional rollers (21.1, 21.2) have pivot axes (SA3, SA4).

3. Trolley (100) according to claim 1 or 2, **characterized in that** the second pair of rollers (14) is arranged in a rear region of the frame structure (10) in such a way that the trolley (100) is transferable into a position, in which only the second pair of rollers (14) touches the floor (1), by a tilting movement around the common horizontal axis (HA3), similar to a sack barrow.

4. Trolley (100) according to claim 1, 2 or 3, **characterized in that** the additional rollers (21.1, 21.2) are arranged in the region between the first pair of rollers (13) and the second pair of rollers (14).

5. Trolley (100) according to claim 1, 2 or 3, **characterized in that** the actuating mechanism (20) is operable by hand or by foot and preferably comprises an operating lever (22).

6. Trolley (100) according to claim 5, **characterized in that** the actuating mechanism (20) comprises an operating lever (22) which acts on the additional rollers (21.1, 21.2) by means of a lever arm in order to transfer them into the driving position.

7. Trolley (100) according to claim 5, **characterized in that** the actuating mechanism (20) comprises a crank that acts on the additional rollers (21.1, 21.2) in order to transfer them into the driving position.

8. Trolley (100) according to any one of the preceding claims, **characterized in that** the transport element (15) for transporting a load (2) comprises
- a support area, preferably an extensible support area,
- an arbor, or
- a support arm
for transporting a load (2).

9. Use of a trolley (100) according to any one of the preceding claims 1 to 8 for transporting paper, cardboard, printing substrate, fabric, foil or coils.

10. Use of a trolley (100) according to any one of the preceding claims 1 to 8 for mounting or loading of a machine or of a store.

## Revendications

1. Chariot transporteur (100) comprenant un cadre (10) présentant, dans une zone proche du sol (11) une première paire de roulettes (13) et une deuxième paire de roulettes (14) qui sont montées sur le cadre (10) de telle façon que le chariot transporteur (100) peut rouler sur le sol (1),
- la première paire de roulettes (13) comprenant deux roulettes (13.1, 13.2) pouvant chacune rouler autour d'un axe horizontal (HA1, HA2) et pouvant chacune pivoter autour d'un axe de pivotement (SA1, SA2),
- la deuxième paire de roulettes (14) comprenant deux roulettes (14.1, 14.2) qui sont agencées fixes l'une par rapport à l'autre de façon coaxiale et qui peuvent rouler autour d'un axe horizontal commun (HA3),
le chariot transporteur (100) comprenant une zone (12) pour pouvoir pousser manuellement le chariot transporteur (100) et un élément de transport (15) pour pouvoir transporter une charge (2), le chariot transporteur (100) comprenant deux roulettes supplémentaires (21.1, 21.2), **caractérisé en ce que** les deux roulettes supplémentaires (21.1, 21.2) sont agencées dans la zone proche du sol (11) mobiles sur un mécanisme d'actionnement (20) de façon à pouvoir passer, en cas de besoin, en position de roulement, les roulettes (14.1, 14.2) de la deuxième paire de roulettes (14), lors du passage en position de roulement, étant retirées du sol (1).

2. Chariot transporteur (100) selon la revendication 1, **caractérisé en ce que** les deux roulettes supplémentaires (21.1, 21.2) ont des axes de pivotement (SA3, SA4).

3. Chariot transporteur (100) selon la revendication 1 ou 2, **caractérisé en ce que** la deuxième paire de roulettes (14) est agencée dans une partie arrière du cadre (10) de façon à ce que le chariot transporteur (100), par un mouvement de basculement autour de l'axe horizontal commun (HA3) puisse être amené, à la façon d'un diable, dans une position dans laquelle seule la deuxième paire de roulettes (14) repose sur le sol (1).

4. Chariot transporteur (100) selon la revendication 1, 2 ou 3, **caractérisé en ce que** les roulettes supplémentaires (21.1, 21.2) sont agencées dans une zone entre la première paire de roulettes (13) et la deuxième paire de roulettes (14).

5. Chariot transporteur (100) selon la revendication 1, 2 ou 3, **caractérisé en ce que** le mécanisme d'actionnement (20) peut être actionné à la main ou au pied et comprend de préférence un levier d'actionnement (22).

6. Chariot transporteur (100) selon la revendication 5, **caractérisé en ce que** le mécanisme d'actionnement (20) comprend un levier d'actionnement (22) qui agit, par le biais d'un bras de levier, sur les roulettes supplémentaires (21.1, 21.2) pour les faire passer en position de roulement.

7. Chariot transporteur (100) selon la revendication 5, **caractérisé en ce que** le mécanisme d'actionnement (20) comprend une manivelle qui agit sur les roulettes supplémentaires (21.1, 21.2) pour les faire passer en position de roulement.

8. Chariot transporteur (100) selon l'une des revendications précédentes, **caractérisé en ce que** l'élément de transport (15) prévu pour transporter une charge (2) comprend
- une zone d'appui, de préférence une zone d'appui extensible,
- un mandrin de réception ou
- un bras de réception
pour transporter la charge (2).

9. Utilisation d'un chariot transporteur (100) selon l'une des revendications précédentes 1 à 8 pour transporter du papier, du carton, des substrats d'impression, du tissu, des feuilles ou des bobines.

10. Utilisation d'un chariot transporteur (100) selon l'une des revendications précédentes 1 à 8 pour équiper ou charger une machine ou un entrepôt.
